# EUROPEAN PATENT APPLICATION

(11) **EP 1 625 794 A1**
(43) Date of publication of application: **15.02.2006**
(21) Application number: 05107344.3
(22) Date of filing: 10.08.2005
(51) Int. Cl.: A23C 9/12, A23C 9/127

(54) **Increased vitamin content in fermented milk product**

(30) Priority: 10.08.2004 NL 1026817
(71) Applicant: Campina Nederland Holding B.V., 5301 LB Zaltbommel (NL)
(72) Inventor: Bruinenberg, Paul Gerard, 5071 KE, Udenhout (NL); Smid, Eilt Johannes, 6708 LG, Wageningen (NL)
(74) Representative: van Westenbrugge, Andries

(57) **Abstract**

Disclosed is a fermented milk product containing *in situ* produced vitamin B12 and *in situ* produced vitamin B2, wherein at least bacteria capable of producing both vitamin B12 and B2 are present, which result in a content of *in situ* produced vitamin B12 of preferably at least 150 % and a content of *in situ* produced vitamin B2 of preferably at least 120 % of the content of *in situ* produced vitamin B12 and *in situ* produced vitamin B2, respectively, achieved in absence of at least bacteria capable of producing both vitamin B12 and B2. The invention also relates to a method of preparing such a fermented milk making use of a common starter culture, wherein a vitamin B2-producing microorganism is added. The invention further relates to the use of a vitamin B2-producing microorganism for increasing the content of *in situ* produced vitamin B2 in a fermented milk product.

## Description

The invention pertains to a fermented milk product with an increased content of *in situ* produced vitamin B2 and *in situ* produced vitamin B12, to a method for preparing such a fermented milk product, as well as to the use of a vitamin B2-producing microorganism for increasing the content of *in situ* produced vitamin B2 in a fermented milk product, in particular in yoghurt.

Fermented milk products are commonly prepared by fermentation of milk in the presence of common starter cultures, which in the case of yoghurt usually contain *Lactobacillus delbruecki* spp. *bulgaricus* and/or *Streptococcus thermophilus.*

In the art there is a need for adding components, for example vitamins, to such fermented milk products, thus enriching the product with this component and providing it with a higher nutritional value. Such an enrichment can for example be achieved by adding the vitamins in chemically (partly) pure form to the prepared fermented milk product. However, this is disadvantageous from a cost point of view and has the further disadvantage that it concerns an *ex situ* produced product that possibly negatively affects the taste of the yoghurt. In addition, from a consumer acceptance point of view of a new product, the need exists to increase the content of vitamins which are naturally present in yoghurt, i.e. by fermentation. Thus, in the field there is a need for *in situ* increasing the content of one or more vitamins, i.e. in the fermented milk product itself.

Vitamin B12 is required for the production of red blood cells and for a good performance of the nervous system. Animal products exclusively provide vitamin B12, so that especially people that do not consume meat products, such as for instance vegetarians, are at risk of absorbing insufficient amounts of vitamin B12, i.e. less than the recommended daily dose.

Vitamin B2 is indispensable in the energy supply of the body, especially for releasing energy from carbohydrates, proteins and fats that enter the body via nutrition. Hence, it is an important vitamin for metabolism and of importance for a good health. A vitamin B2 shortage can result in anaemia and retarded growth.

It was found in US 2,715,602, filed in 1951, that high yields of vitamin B12 can be produced in the fermentation of nutriet mashes, for instance in the manufacture of high grade Emmenthaler or Swiss cheese, by species of *Propionibacterium freudenreicchii* and *P. shermanii,* if adding about 1.1 milligram cobalt ions per liter growth medium. It does not require further explanation that the use of cobalt salts in food-grade products is nowadays avoided.

From 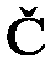 erná and Hrabová. Milchwissenschaft 1977, vol. 32(5): 274-277: Biological enrichment of fermented milk beverages with vitamin B12 and folic acid) it is known to enrich the vitamin B12 content of fermented milk products by adding *Propionibacterium shermani* no. 2 to the milk at the start of fermentation. With the additional *in situ* production of vitamin B12 by the *Propionibacterium* strain fermented milk products were obtained that exhibited an increased content of *in situ* produced vitamin B12.

It is now surprisingly found that, in addition to an enrichment of *in situ* produced vitamin B12, an enrichment of *in situ* produced vitamin B2 in a fermented milk product can also be achieved by adding at least bacteria capable of producing both vitamin B12 and vitamin B2 to the fermented milk product, in particular bacteria of the genus *Propionibacterium,* more in particular of the species *Propionibacterium freudenreichi,* preferably *Propionibacterium freudenreichi* spp *freudenreichi* B2336, which is deposited on 14 July 2004 in accordance with the Budapest treaty with the Central Bureau for Fungus Cultures in Utrecht, and is appointed the deposit number CBS 115916.

In a first aspect the invention thus relates to a fermented milk product having an increased content of *in situ* produced vitamin B12 and *in situ* produced vitamin B2, wherein at least bacteria are present which are capable of producing both vitamin B2 and vitamin B12, which result in an increased content, preferably at least 150 %, of *in situ* produced vitamin B12, and an increased content, preferably at least 120 %, of *in situ* produced vitamin B2, compared to the content of *in situ* produced vitamin B12 and *in situ* produced vitamin B2, respectively, achieved in absence of at least bacteria capable of producing both vitamin B2 and vitamin B12. The fermented milk product does not contain cobalt ions in a detectable amount.

The term "fermented milk product" as used herein refers to all products that can be prepared by fermentation of milk with a specific starter culture. Non-limiting examples include yoghurt, kefir, curd cheese, curd, buttermilk, butter, fresh cheese and semi-solid cheese.

The content of *in situ* produced vitamin B2 and B 12 in a fermented milk product depends on many factors, such as the starter culture used, the vitamin B2 and vitamin B12 content of the milk, in case of a mixed starter culture the ratio between the bacteria, temperature during fermentation, time of fermentation, storage conditions etc.. Therefore, "the content of *in situ* produced vitamin B12 and *in situ* produced vitamin B2, respectively, achieved in absence of at least bacteria capable of producing both vitamin B2 and vitamin B12" refers to the content of in *situ* produced vitamin B12 and *in situ* produced vitamin B2, respectively, which, starting from the same milk, the same starter culture, the same temperature and the same time period and storage conditions is found in the fermented milk product in absence of at least bacteria capable of producing both vitamin B12 and vitamin B2. The term thus refers to the content of vitamin B12 and B2, respectively, which is produced in the fermented milk product, i.e. *in situ*, in the absence of bacteria capable of producing both vitamin B12 and vitamin B2, hence only in the presence of the starter culture and optionally bacteria other than bacteria capable of producing both vitamin B12 and vitamin B2.

The presence of at least bacteria capable of producing both vitamin B12 and vitamin B2 increases the content of *in situ* produced vitamin B12 with preferably at least 150 %, more preferably at least 170 %, even more preferably at least 190 %, most preferably at least 200 %, relative to the content of *in situ* produced vitamin B12 which is achieved in the absence of at least bacteria capable of producing both vitamin B12 and vitamin B2. The bacteria capable of producing both vitamin B12 and vitamin B2 thus result in an increase in the content of vitamin B12. Moreover, one or more other vitamin B12 producing bacteria which also have the GRAS status can be added to further increase the content of *in situ* produced vitamin B12. The content of *in situ* produced vitamin B12 in the presence of at least bacteria capable of producing both vitamin B12 and vitamin B2 will at most be about 500 % with respect to the content of *in situ* produced vitamin B12, which is achieved in absence of at least bacteria capable of producing both vitamin B12 and B2.

In addition, the presence of at least bacteria capable of producing both vitamin B12 and B2 results in an increase of the content of *in situ* produced vitamin B2 in the fermented milk product with preferably at least 120 %, more preferably at least 125 %, even more preferably at least 130 %, most preferably at least 140 %, with respect to the content of *in situ* produced vitamin B2, which is achieved in absence of bacteria capable of producing both vitamin B12 and B2. The content of *in situ* produced vitamin B12 in the presence of at least bacteria capable of producing both vitamin B12 and B2 is at most about 500 % compared to the content of *in situ* produced vitamin B12 achieved in absence of at least bacteria capable of producing both vitamin B12 and B2.

It is now found for the first time that not only the vitamin B12 content, but also the vitamin B2 content in a fermented milk product can be increased by using a microorganism, in order to obtain a fermented milk product that completely naturally provides the required and recommended daily doses of both vitamins even better.

In a preferred embodiment at least bacteria of the genus *Propionibacterium* are present. For the first time within this genus a bacterial strain is found that can produce vitamin B2 and can also produce vitamin B12. However, it is to be expected that more bacterial strains within this genus can produce vitamin B2.

In another preferred embodiment at least bacteria of the species *Propionibacterium freudenreichi* are present. The aforementioned especially holds for bacteria of this species.

In yet another preferred embodiment at least bacteria of the strain *Propionibacterium freudenreichi* spp *freudenreichi* B2336 are present. It was found that this strain was able to provide an exceptionally large increase of the content of *in situ* produced vitamin B12 and *in situ* produced vitamin B2.

In another embodiment of the invention the fermented milk product can be prepared by fermentation of milk in the presence of a common starter culture and at least bacteria capable of producing both vitamin B12 and B2, preferably bacteria of the genus *Propionibacterium,* more preferably bacteria of the species *Propionibacterium freudenreichi,* most preferably bacteria of the strain *Propionibacterium freudenreichi spp freudenreichi* B2336. Thus, common starter culture and at least bacteria capable of producing both vitamin B12 and B2, preferably bacteria of the genus *Propionibacterium,* more preferably bacteria of the species *Propionibacterium freudenreichi,* most preferably bacteria of the strain *Propionibacterium freudenreichi spp freudenreichi* B2336 are provided to the milk preceding fermentation, where after the milk is fermented under conventional fermentation conditions in the presence of the starter culture and the bacteria capable of producing both vitamin B12 and B2, preferably bacteria of the genus *Propionibacterium,* more preferably bacteria of the species *Propionibacterium freudenreichi,* most preferably bacteria of the strain *Propionibacterium freudenreichi* spp *freudenreichi* B2336, to obtain the fermented milk product according to the invention. It is preferred that fermentation is performed at anaerobic conditions, i.e. no stirring is applied during fermentation.

As used herein, the term "starter culture" comprises all microorganisms that are provided to the milk for fermentation. It can thus comprise one or more starter cultures that are provided to the milk as separate batches or that are first combined preceding provision to the milk. The one or more starter cultures can also be commercial starter culture preparations, such as for instance culture 1^{st}/RR available from CSK food enrichment and A1 available from Danisco.

The common starter culture for fermentation is dependent on the fermented milk product to be prepared. A person skilled in the art will know which common starter culture to select, depending on the fermented milk product to be prepared. Examples of common starter cultures are starter cultures comprising *Lactobacillus delbruecki spp. bulgaricus* and *Streptococcus thermophilus* for yoghurt; *Lactobacillus acidophilus, Bifidobacterium* and *Streptococcus thermophilus* for mild yoghurt; mesophilic mixed cultures consisting of *Lactococcus lactis* spp. *lactis*/*cremoris, Leuconostoc* spp., *Lactococcus lactis* spp. *lactis* var. *diacetylactis* for curd, fresh cheese, butter and semi-solid cheese.

With the term "conventional fermentation conditions" as used herein it is meant that fermentation of the milk to the fermented milk product is performed at conditions which are similar or identical to the fermentation conditions in the absence of the bacteria capable of producing both vitamin B12 and B2. Thus, the presence of bacteria capable of producing both vitamin B12 and B2 does not force the skilled person to change the fermentation conditions required to obtain the fermented milk product. The conventional fermentation conditions are dependent on the fermented milk product to be prepared and on the applied starter culture. A person skilled in the art will be capable of determining the conventional fermentation conditions easily.

It was found that bacteria capable of producing both vitamin B12 and vitamin B2, such as for example bacteria of the strain *Propionibacterium freudenreichi* spp *freudenreichi* B2336, do not grow under these conventional fermentation conditions, but surprisingly remain metabolically active, i.e. produce vitamin B12 and B2,

In another embodiment of the invention the fermented milk product can be prepared by fermentation of milk in the presence of a common starter culture, and at least bacteria capable of producing both vitamin B12 and B2, preferably bacteria of the genus *Propionibacterium,* more preferably bacteria of the species *Propionibacterium freudenreichi,* most preferably bacteria of the strain *Propionibacterium freudenreichi spp freudenreichi* B2336, are added after fermentation.

It was found that bacteria capable of producing both vitamin B12 and B2, such as for example bacteria of the strain *Propionibacterium freudenreichi* spp *freudenreichi* B2336, do also not grow but remain metabolically active, i.e. produce vitamin B12 and B2, at cold storage, which is usually at a temperature in the range of about 2 to about 8 °C. Thus, bacteria capable of producing both vitamin B12 and B2, such as for example *Propionibacterium freudenreichi* spp *freudenreichi* B2336, can also be added after fermentation and still *in situ* produce vitamin B2 and vitamin B12.

It can be important to preculture at least bacteria capable of producing both vitamin B12 and B2, such as for instance *Propionibacterium freudenreichi* spp *freudenreichi* B2336, before adding these bacteria to the milk of the fermented milk product, in a medium that enhances the *in situ* vitamin B2 and/or vitamin B12 production, such as for example a medium of milk and bacto-casiton (Difco Laboratories, Le Pont de Claix, France) or lactate medium [0.5 %(w/v) trypton (Sigma-Aldrich, Steinheim, Germany), 1.0 %(w/v) yeast extract (Sigma-Aldrich), 2.5 %(w/v) sodium lactate (Sigma-Aldrich), 0.48 %(w/v) sodium acetate (Merck, Darmstadt, Germany)] or a medium consisting of (hydrolysed) milk and whey powder. The medium described in 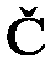 erná and Hrabová (1977) for enhancing the *in situ* vitamin B12 production can also be used for this enhancement. Alternatively, an acidic culture extract of bacteria capable of producing both vitamin B12 and B2, preferably bacteria of the genus *Propionibacterium,* more preferably bacteria of the species *Propionibacterium freudenreichi,* most preferably bacteria of the strain *Propionibacterium freudenreichi* spp *freudenreichi* B2336 can be applied. Besides, it can be advantageous to ferment the milk in a first step with bacteria capable of producing both vitamin B12 and B2, preferably bacteria of the genus *Propionibacterium,* more preferably bacteria of the species *Propionibacterium freudenreichi,* most preferably bacteria of the strain *Propionibacterium freudenreichi spp freudenreichi* B2336, to increase the content of *in situ* produced vitamin B2 and/or vitamin B12, where after in a second step the thus prefermented milk is subjected to a further fermentation according to conventional methods, i.e. with the appropriate starter culture(s) under appropriate fermentation conditions, to obtain the fermented milk product.

In a preferred embodiment the fermented milk product is yoghurt. It was found that in the presence of bacteria of the genus *Propionibacterium* also a small amount of propionic acid is observed in the yoghurt product, which provides the yoghurt with a pleasant, slightly sweet taste.

In a second aspect the invention relates to a method of preparing a fermented milk product, making use of a common starter culture, wherein the content of the *in situ* produced vitamin B2 is increased by the addition of a vitamin B2-producing microorganism. The method is preferably performed under anaerobic conditions, which means that no stirring is applied in the fermented milk product during preparation. The addition of cobalt ions is required nor favoured in the method of the invention.

The content of *in situ* produced vitamin B2 can be increased by adding any vitamin B2-producing microorganism capable of producing vitamin B2 under fermentation conditions.

It is now found for the first time that the content of *in situ* produced vitamin B2 in a fermented milk product can be increased by a vitamin B2-producing microorganism, *in casu Propionibacterium freudenreichi spp freudenreichi* B2336. Up to present, no vitamin B2-producing microorganisms are known which have the GRAS status and could thus be applied in a foodstuff.

In an embodiment of the method according to the invention the vitamin B2-producing microorganism also increases the content of *in situ* produced vitamin B12. The vitamin B2-producing microorganism is thus also a vitamin B12-producing microorganism.

The vitamin B2-producing microorganism preferably belongs to the genus *Propionibacterium.* It is known that certain bacteria of the genus *Propionibacterium* are vitamin B2-producing microorganisms. It is now found for the first time that a strain belonging to this genus also produces vitamin B2 in a fermented milk product.

More preferably, the vitamin B2-producing microorganism belongs to the species *Propionibacterium freudenreichi.* However, it is to be expected that, in addition to the aforementioned *Propionibacterium freudenreichi* spp *freudenreichi* B2336, more bacterial strains within this genus can produce vitamin B2.

Most preferably, the vitamin B2-producing microorganism belongs to the strain *Propionibacterium freudenreichi spp freudenreichi* B2336, because it is found that this particular *Propionibacterium* strain can provide a simultaneous increase of the content of *in situ* produced vitamin B12 and vitamin B2, in order to obtain an advantageously simultaneous increase of the content of *in situ* produced vitamin B12 and vitamin B2.

In a third aspect the invention relates to the use of a vitamin B2-producing microorganism for increasing the content of *in situ* produced vitamin B2 in a fermented milk product. For the first time a vitamin B2-producing microorganism is identified which is capable of producing vitamin B2 in a fermented milk product, which can also safely be applied in such a product, i.e. has the GRAS status.

The vitamin B2-producing microorganism preferably belongs to the genus *Propionibacterium.* The aforementioned vitamin B2-producing microorganism belongs to this genus and it is to be expected that more species or strains belonging hereto, are capable of producing vitamin B2.

More preferably, the vitamin B2-producing microorganism belongs to the species *Propionibacterium freudenreichi*, for the aforementioned reasons.

Most preferably, the vitamin B2-producing microorganism belongs to the strain *Propionibacterium freudenreichi spp freudenreichi* B2336.

In a preferred embodiment the vitamin B2-producing microorganism, preferably of the genus *Propionibacterium,* more preferably of the species *Propionibacterium freudenreichi,* most preferably of the strain *Propionibacterium freudenreichi* spp *freudenreichi* B2336, is applied for also increasing the content of *in situ* produced vitamin B12 in a fermented milk product. It is advantageous to achieve a simultaneous increase in both the vitamin B2 and vitamin B2 content by using only one microorganism.

The fermented milk product is preferably yoghurt, because it is found that the content of *in situ* produced vitamin B2 and the content of *in situ* produced vitamin B12 in yoghurt is advantageously increased, and because the propionic acid, which is mainly produced by bacteria of the genus *Propionibacterium* provides the yoghurt with good taste properties.

The invention will be explained in the following part by means of examples, in connection to the figures, in which the following is shown:

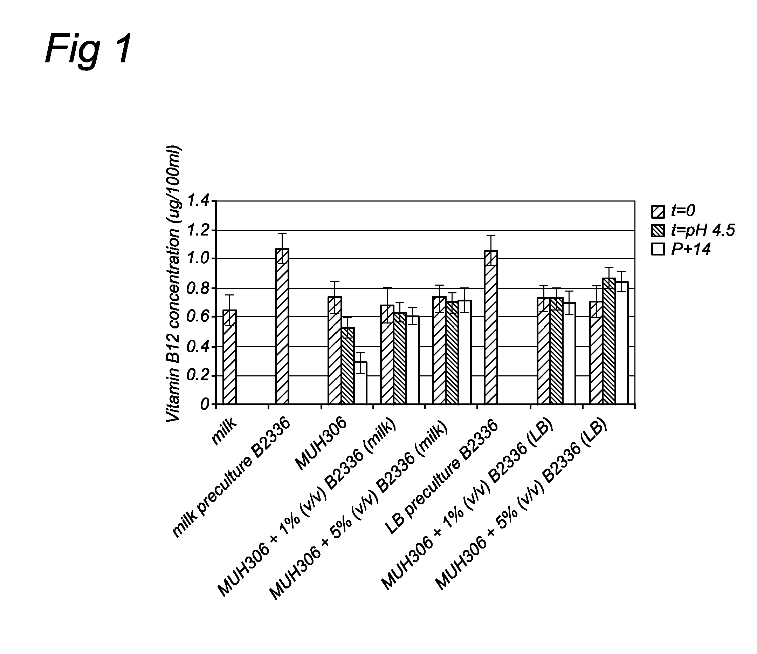

Fig. 1 shows the amount of *in situ* produced vitamin B12 in milk with 0.1 %(w/v) bacto-casiton, a preculture of *Propionibacterium* B2336 in milk, a reference yoghurt which is prepared in absence of *Propionibacterium* B2336, yoghurt which is prepared in the presence of 1 %(v/v) of preculture of *Propionibacterium* B2336 in milk, yoghurt which is prepared in the presence of 5 %(v/v) preculture of *Propionibacterium* B2336 in milk, a preculture of *Propionibacterium* B2336 in lactate medium (LB), yoghurt which is prepared in the presence of 1 %(v/v) of preculture of *Propionibacterium* B2336 in lactate medium, and yoghurt which is prepared in the presence of 5 %(v/v) preculture of *Propionibacterium* B2336 in lactate medium, respectively. The light-shaded areas show the amount preceding fermentation (t=0), the dense-shaded areas show the amount after fermentation (t=pH 4.5) and the white areas show the amount after 14 days of cold storage at about 4 °C.

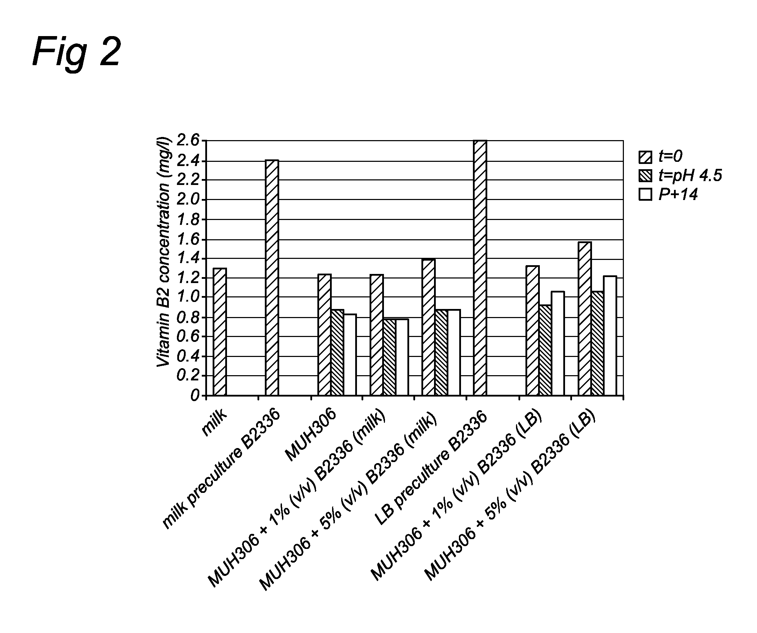

Fig. 2 shows the amount of *in situ* produced vitamin B2 in milk, a preculture of *Propionibacterium* B2336 in milk, a reference yoghurt which is prepared in absence of *Propionibacterium* B2336, yoghurt which is prepared in the presence of 1 %(v/v) of preculture of *Propionibacterium* B2336 in milk, yoghurt which is prepared in the presence of 5 %(v/v) preculture of *Propionibacterium* B2336 in milk, a preculture of *Propionibacterium* B2336 in lactate medium (LB), yoghurt which is prepared in the presence of 1 %(v/v) of preculture of *Propionibacterium* B2336 in lactate medium, and yoghurt which is prepared in the presence of 5 %(v/v) preculture of *Propionibacterium* B2336 in lactate medium, respectively. The light-shaded areas show the amount preceding fermentation (t=0), the dense-shaded areas show the amount after fermentation (t=pH 4.5) and the white areas show the amount after 14 days of cold storage at about 4 °C. For clarity reasons the y-scale is adapted so that the area presenting the amount of vitamin B12 in the preculture which was cultured in lactate medium (LB) is not shown for its complete length. The amount of vitamin B2 in this preculture is 11.25 mg/l and is therewith a factor 5 higher than the preculture cultured in milk and bacto-casiton.

### EXAMPLES

### Example 1. Preparation of yoghurt with Propionibacterium freudenreichi spp freudenreichi B2336

*Propionibacterium* B2336 was precultured in milk at 30 °C with 0.1 %(w/v) bacto-casiton as additional nitrogen source ("milk"), or lactate medium ("LB"). Yoghurt was prepared anaerobically at 30 °C with the preculture dosages shown in table 1 (t=0), and no growth was observed during yoghurt fermentation (t = pH 4.5) and cold storage during 14 days (t=P + 14). The amounts of *Propionibacterium* cells/ml in milk and yoghurt sample was determined by means of array counts on LB agar.

**Table 1. Cell counts (cfu/ml) Propionibacterium B2336 which were precultured in milk + bacto-casiton or lactate medium (LB) and yoghurt thus prepared.**

| | t=0 | t=pH 4.5 | t = P+14 |
|---|---|---|---|
| Milk preculture B2336 | 4.1 x 10⁷ | | |
| MUH306 reference yoghurt | - | - | - |
| MUH306 + 1%(v/v) B2336 (milk) | 5.0 x 10⁵ | 1.8 x 10⁶ | 6.5 x 10⁵ |
| MUH306 + 5%(v/v) B2336 (milk) | 3.0 x 10⁶ | 4.5 x 10⁶ | 2.0 x 10⁶ |
| Lactate medium preculture *Prop.* B2336 | 5.5 x 10⁸ | | |
| MUH306 + 1%(v/v) B2336 (LB) | 4.2 x 10⁶ | 2.6 x 10⁶ | 5.4 x 10⁶ |
| MUH306 + 5%(v/v) B2336 (LB) | 1.5 x 10⁷ | 2.0 x 10⁷ | 3.4 x 10⁷ |

| | | | |
|---|---|---|---|
| -: not present | | | |

### Example 2. Production of vitamin B12 and B2 in yoghurt prepared with Propionibacterium freudenreichi B2336

Then the amount of vitamin B12 and vitamin B2 in the precultures and the yoghurt thus prepared were determined (see fig. 1 and fig. 2, respectively).

The vitamin B12 content was determined using a microbiological test which uses *Lactobacillus delbruecki* ATCC 7830 according to G.F.M. Ball (1998, In: Bioavailability and analysis of vitamins in Food, red. Chapman & Hall, London, pp. 497 - 515). The vitamin B2 content was determined using the HPLC method according to R. Gauch, U. Leuenberger and U. Müller (1992, Zeitschrift Lebensmittel Unterzuchung und Forschung, vol 195, pp. 312 - 315).

The results show that the vitamin B12 content increases by about a factor 2 - 3 in the presence of *Propionibacterium freudenreichi* B2336, in comparison to reference yoghurt not containing any bacteria of the strain *Propionibacterium freudenreichi* B2336, while the vitamin B2 content in especially yoghurt prepared with a preculture of the strain in lactate medium showed a 30 - 45 % increase with respect to reference yoghurt.

## Claims

1. A fermented milk product containing an increased content of *in situ* produced vitamin B12 and an increased content of *in situ* produced vitamin B2, wherein at least bacteria capable of producing both vitamin B12 and B2 are present.

2. The fermented milk product according to claim 1, wherein said increased content of *in situ* produced vitamin B12 is at least 150 % and said increased content of *in situ* produced vitamin B2 is at least 120 % of the content of *in situ* produced vitamin B12 and *in situ* produced vitamin B2, respectively, achieved in absence of at least bacteria capable of producing both vitamin B12 and B2.

3. The fermented milk product according to claim 1 or 2, wherein at least bacteria of the genus *Propionibacterium* are present.

4. The fermented milk product according to claim 3, wherein at least bacteria of the species *Propionibacterium freudenreichi,* preferably of the strain *Propionibacterium freudenreichi* spp *freudenreichi* B2336, are present.

5. The fermented milk product according to any one of the preceding claims, wherein said product is prepared by fermentation of milk in the presence of a common starter culture and at least bacteria of the strain *Propionibacterium freudenreichi spp freudenreichi* B2336.

6. The fermented milk product according to any one of the preceding claims, wherein said product is prepared by fermentation of milk in the presence of a common starter culture and the addition of said bacteria after fermentation.

7. The fermented milk product according to any one of the preceding claims, wherein said fermented milk product is yoghurt.

8. A method of preparing a fermented milk product, making use of a common starter culture, wherein the content of *in situ* produced vitamin B2 is increased by the addition of a vitamin B2-producing microorganism.

9. The method according to claim 8, wherein said vitamin B2-producing microorganism also increases the content of *in situ* produced vitamin B12.

10. The method according to claim 8 or 9, wherein said vitamin B2-producing microorganism belongs to the genus *Propionibacterium.*

11. The method according to claim 10, wherein said vitamin B2-producing microorganism belongs to the species *Propionibacterium freudenreichi*, preferably to the strain *Propionibacterium freudenreichi spp freudenreichi* B2336.

12. Use of a vitamin B2-producing microorganism for increasing the content of *in situ* produced vitamin B2 in a fermented milk product.

13. Use according to claim 12, wherein said vitamin B2-producing microorganism belongs to the genus *Propionibacterium,* preferably to the species *Propionibacterium freudenreichi,* more preferably to the strain *Propionibacterium freudenreichi spp freudenreichi* B2336.

14. Use according to claim 12 or 13 for also increasing the content of *in situ* produced vitamin B12 in a fermented milk product.

15. Use according to any one of claims 12 - 14, wherein said fermented milk product is yoghurt.
